# EUROPÄISCHE PATENTSCHRIFT

(11) **EP 1 196 481 B1**
(45) Veröffentlichungstag und Bekanntmachung des Hinweises auf die Patenterteilung: **07.12.2005**
(21) Anmeldenummer: 00938822.4
(22) Anmeldetag: 27.06.2000
(51) Int. Cl.: C08J 5/04

(54) **VERFAHREN ZUR HERSTELLUNG VON FASERVERBUNDWERKSTOFFEN**
METHOD FOR PRODUCING FIBER REINFORCED MATERIALS
PROCEDE POUR PRODUIRE DES MATERIAUX COMPOSITES RENFORCES PAR DES FIBRES

(30) Priorität: 03.07.1999 DE 19930770
(43) Veröffentlichungstag der Anmeldung: 17.04.2002
(73) Patentinhaber: Cognis Deutschland GmbH & Co. KG, 40789 Monheim (DE)
(72) Erfinder: SKWIERCZ, Michael, D-40764 Langenfeld (DE); ELBERFELD, Doris, D-26169 Friesoythe (DE); RÖSSNER, Frank, D-26313 Oldenburg (DE); GUTSCHE, Bernhard, D-40724 Hilden (DE)
(86) Internationale Anmeldenummer: PCT/EP2000/005937
(87) Internationale Veröffentlichungsnummer: WO 2001/002469

(56) Entgegenhaltungen:
- EP-A- 0 518 338
- DE-A- 4 019 087
- DE-A- 4 024 364
- DE-A- 19 644 017
- DE-A- 19 834 048
- US-A- 5 728 824

## Beschreibung

Die vorliegende Anmeldung betrifft ein Verfahren zur Herstellung von Faserverbundwerkstoffen.

Faserverbundwerkstoffe bestehen wenigstens aus Fasern und einem Matrixmaterial. Dabei dienen die Fasern der Verstärkung des Werkstoffes. Die Fasern nehmen dabei insbesondere am Werkstoff wirkende Zugkräfte auf, die Matrix füllt Hohlräume zwischen den Fasern und umhüllt die Fasern. Damit überträgt die Matrix insbesondere die Schubkräfte, die auf das Verbundmaterial einwirken. Darüber hinaus schützt die Matrix die umhüllten Fasern vor Außeneinflüssen wie z. B. Eindringen von Wasser oder Feuchtigkeit, oxidative oder photooxidative Einflüsse. Bekannt sind Faserverbundwerkstoffe beispielsweise aus glasfaser-, metallfaser- oder kohlenstoffaserverstärkten synthetischen Kunststoffen. Diese Verbundwerkstoffe haben sich in der Vergangenheit wegen ihrer hohen Belastbarkeit, Dauerhaftigkeit und Reproduzierbarkeit in vielen Anwendungsfeldern bewährt. Im Zuge der Forderung nach langfristig tragfähigen Entwicklungen (sustainable development) werden jedoch immer häufiger auch für Verbundmaterialien solche Produkte gefordert, die auf der Basis von Biomasse und/oder landwirtschaftlichen Produkten als nachwachsenden Rohstoffen gefertigt werden. Im Gegensatz zu petrochemischen und fossilen Rohstoffen erschöpfen sich nachwachsende Rohstoffe nicht, sie können über den Anbau geeigneter Pflanzen durch Photosynthese jederzeit regeneriert werden.

Naturfaserverstärkte Kunststoffe sind an sich bekannt; ihre Vorteile gegenüber glasfaserverstärkten Kunststoffen sind hinsichtlich Rohstoffbasis, Ökobilanz, Arbeitsschutz, Gewicht oder thermische Entsorgung sind bereits beschrieben, siehe z. B. Kohler, R.; Wedler, M.; Kessler, R.: "Nutzen wir das Potential der Naturfasern?" In: Gülzower Fachgespräche "Naturfaserverstärkte Kunststoffe" (Hrsg. Fachagentur Nachwachsende Rohstoffe, Gülzow 1995), S. 95-100 oder "Leitfaden Nachwachsende Rohstoffe, Anbau, Verarbeitung, Produkte", 1. Auflage, Heidelberg: Müller, 1998, insbesondere Kapitel 8. Bezüglich der verwendeten Matrizes kann zwischen thermoplastischen und duroplastischen Systemen unterschieden werden. Systeme mit thermoplastischen Matrizes auf der Basis nachwachsender Rohstoffe sind bekannt, so beschreibt die EP-A-687 711 einen Faserverbundwerkstoff aus biologisch abbaubaren Fasern und einer Matrix aus biologisch abbaubarem Material. Als geeignete thermoplastische Materialien für die Matrix werden Celluloseacetat, Lignin, Stärke sowie Stärkederivate vorgeschlagen. Derartige Produkte zeigen sich hinsichtlich Verarbeitbarkeit, mechanische Eigenschaften in wichtigen Anwendungen und Preis als unzulänglich.

Die DE-A-196 47 671 beschreibt einen Faserverbundwerkstoff mit einem Fasermaterial zur Verstärkung und einem Matrixmaterial auf der Basis von Schellack, wobei das Matrixmaterial einen Vernetzer enthalten kann. Hauptnachteil dieses duroplastischen Matrixmaterials ist die sehr begrenzte Verfügbarkeit von Schellack.

Als weitere duroplastische Systeme stehen z. Zt. im wesentlichen Polymersysteme zur Verfügung, deren Rohstoffe zum ganz überwiegenden Teil petrochemischer Provenienz sind (Polyurethane, Epoxidharze, Polyester usw.). Im Bereich der Polyurethane gibt es einige Vorschläge zur Entwicklung von nativ basierenden Rohstoffen, so schlägt die EP-A-634 433 als Bindemittel zur Herstellung von Verbundmaterialien Reaktionsprodukte aus einem Polyester, erhältlich durch Selbstkondensation von Recinolsäure mit einem aromatischen Polyisocyanat vor.

Weiterhin schlägt die DE-A-41 19 295 einen umweltsicheren Verbundwerkstoff aus Naturfasern und Kunststoffen des Typs Polyurethan-Polyester und/oder PolyurethanPolyamid vor, die hydroxidgruppentragende natürliche Fettsäuren unveränderter Länge oder deren Derivate enthalten.

R. Mülhaupt, D. Hoffmann, S. Lawson und H. Warth, angewandte makromolekulare Chemie 249 (1997), Seite 79 bis 92 beschreiben flexible, semiflexible und starre Polyesternetzwerke auf der Basis von maleinierten Ölen aus Pflanzenölen, wie Sojabohnen-, Raps- und Leinöl als Anhydrid-funktionelle Härter mit Epoxidharzen auf Basis Bisphenol-A-Diglycydylether oder epoxidierter Pflanzenöle. Weiterhin werden ungesättigte Polyesterharze basierend auf Maleinsäureanhydrid, epoxidierten Pflanzenölen und Styrol beschrieben, die gegebenenfalls mit natürlichen Kurzfasem wie Flachs oder Hanf verstärkt werden können. Über deren Verarbeitbarkeit auf bestehenden Verarbeitungsmaschinen werden keine Aussagen gemacht.

Bei der Entwicklung von Verbundwerkstoffen stehen, neben der Frage der Auswahl von ökologisch unbedenklichen, möglichst nachwachsender Rohstoffe, natürlich die mechanischen Eigenschaften dieser Werkstoffe im Vordergrund. In diesem Zusammenhang wird insbesondere eine gute Zugfestigkeit gefordert.

Der vorliegenden Erfindung liegt die Aufgabe zugrunde, Verbundwerkstoffe bereitzustellen, bei denen sowohl die Verstärkungsmittel als auch die Matrixmaterialien im wesentlichen auf der Basis nachwachsender Rohstoffe aufgebaut sind und die dabei gegenüber bekannten Materialien verbesserte mechanische Eigenschaften aufweisen.

Überraschenderweise wurde gefunden, daß bei Werkstoffen auf Basis nachwachsender Rohstoffe durch Begrenzung der Faseranteile, bezogen auf das Matrixmaterial, Werkstoffe mit vorteilhaften mechanischen Eigenschaften erhalten werden.

Ein erster Gegenstand der vorliegenden Erfindung ist ein Verfahren zur Herstellung von Faserverbundwerkstoffen auf der Basis von Naturfasern und einem Matrixmaterial, wobei das Matrixmaterial durch radikalische Polymerisation aus den Monomeren a) und mindestens einem Comonomeren b) hergestellt wird und die Monomeren a) ausgewählt sind aus der Gruppe der Ringöffnungsprodukte von epoxidierten Fettstoffen mit olefinisch ungesättigten Carbonsäuren und die Comonomeren b) ausgewählt sind aus der Gruppe der olefinisch ungesättigte Carbonsäuren, wobei die Polymerisationsreaktion in Gegenwart von 25 bis 45 Gew.-% des Fasermaterials, bezogen auf das Gewicht des Matrixmaterials und bei Temperaturen von 100 bis 200 °C sowie erhöhten Druck von 20- 200 bar durchgeführt wird.

Die Monomeren a) sind bekannte Verbindungen und ausgewählt aus der Gruppe der epoxidierten, mit Carbonsäuren ringgeöffneten Fettstoffe. Die epoxidierten Fettstoffe werden durch Umsetzung geeigneter Ausgangsmaterialien mit Ethylenoxid erhalten. Beispiele für geeignete Ausgangsmaterialien sind vorzugsweise die natürlichen Fette und Öle von Raps, Sonnenblumen, Soja, Lein, Hanf, Ricinus, Kokusnüssen, Ölpalmen, Ölpalmkernen und Ölbäumen. Besonders vorteilhaft ist die Verwendung von epoxidiertem Sojaöl, das vorzugsweise 5 bis 10 Gew.-% Epoxidgruppen enthält. Die Reaktion der epoxidierten Fettstoffe mit olefinisch ungesättigten Carbonsäuren verläuft im Sinne einer nucleophilen Ringöffnungsreaktion am Epoxidring der Fettstoffe. Die Carbonsäuren sind vorzugsweise ausgewählt aus der Gruppe der ungesättigten C₃ bis C₁₀ Carbonsäuren, namentlich von Acrylsäure, Methacrylsäure, Crotonsäure, Itakonsäure, Maleinsäure, Fumarsäure. Besonders bevorzugt sind Monomere a) die durch Ringöffnung von epoxidierten Fettstoffen mit Acrylsäure erhalten werden. Besonders bevorzugt sind Monomere a) aus Sojaölepoxid, ringgeöffnet mit Acrylsäure. Bei der Umsetzung der Epoxide mit den Carbonsäuren ist es vorteilhaft, einen Überschuß an olefinisch ungesättigter Carbonsäure einzusetzen, um eine möglichst vollständige Umsetzung zu erreichen. Vorzugsweise werden die Reaktanden im Molverhältnis von ca. 1 : 2 (Epoxid : Säure) eingesetzt. Die Ringöffnungsreaktion findet bei erhöhten Temperaturen von 100 bis 200 °C statt und kann, in Abhängigkeit der Reaktivität der Säurekomponente auch ohne Katalysator durchgeführt werden. Vorzugsweise findet die Polymerisation bei Temperaturen von 130 bis 200 °C und insbesondere bei Temperaturen von 150 bis 180 °C statt. Wenn notwendig können aber bekannte alkalische oder saure Katalysatoren zur Reaktionsbeschleunigung zugesetzt werden. Bei Verwendung sehr reaktiver Carbonsäuren, wie der Acrylsäure, kann es vorteilhaft sein, durch Zugabe geeigneter Inhibitoren, z.B. Hydrochinon oder p-Benzochinon, eine Kondensation der Säure untereinander zu verhindern. Der Inhibitor wird dann in Mengen von 1 bis 20 Gew.-% bezogen auf das Gewicht an Carbonsäure, zugesetzt.

Die Monomeren a) werden im erfindungsgemäßen Verfahren in Gegenwart mindestens eines Comonomeren b) vorzugsweise in einer Form bei erhöhter Temperatur zusammen mit den Fasern zu den gewünschten Werkstücken verarbeitet. Es kann aber auch eine Verarbeitung nach dem sogenannten Handlaminierverfahren durchgeführt werden. Es findet jeweils eine radikalische Polymerisation zwischen den Monomeren a) und b) statt, die zu einer Aushärtung der an sich duroplastischen Ausgangskomponente a) führt. Bei dieser Umsetzung reagieren die ungesättigten Stellen .der Monomere a) und b) miteinander was zu einer Aushärtung des Materials führt. Die Matrix umschließt dabei das Fasermaterial und führt so zur Bildung eines stabilen Werkstoffs. Bei der Herstellung der Faserverbundwerkstoffe werden. Fasern und Matrixmaterial unter erhöhtem Druck zur Reaktion gebracht. Der Druck im erfindungsgemäßen Verfahren liegt zwischen 20 und 200 bar und vorzugsweise zwischen 20 und 60 bar. Die Reaktionsszeiten für die Polymerisation liegen vorzugsweise zwischen 30 Sekunden und etwa 20 Minuten und insbesondere zwischen 1 und 5 Minuten.

Die Comonomeren b) enthaltend mindestens eine olefinische ungesättigte Doppelbindung und sind vorzugsweise ausgewählt aus der Gruppe der Acrylsäure und deren Derivate, wie der Methacrylsäure. Generell sind Alkylmethacrylsäuren der allgemeinen Formel (I) 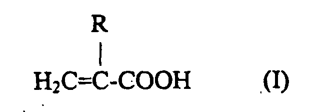 in der R für einen Alkylrest mit 1 bis 22 C-Atomen steht, geeignet. Es können aber auch mehrere Comonomere b) in Abmischung mit den Monomeren a) radikalisch polymerisiert werden. Dabei werden, mit Bezug auf das Gewicht an Monomeren a) vorzugsweise 1 bis 10 Gew.-% an Comonomeren b), vorzugsweise 2 bis 6 Gew.-% und insbesondere 2 bis 4 Gew.-% eingesetzt.

Neben den bereits oben beschriebene Vertretern der Comonomeren b) können auch weitere Verbindungen, vorzugsweise aus der Gruppe gebildet aus den Derivaten von Acryl-, Methacryl- und Alkylacrylsäure, insbesondere deren Ester mit C₁- bis C₃₀-Alkoholen, vorzugsweise von C₁₀- bis C₂₂-Alkoholen sowie allgemein Allylester, oder Vinylester wie Vinylacetat, Vinylproprionat oder Vinylversatat, Vinyllaurat oder Styrol, Divinylbenzol oder deren Mischungen eingesetzt werden.

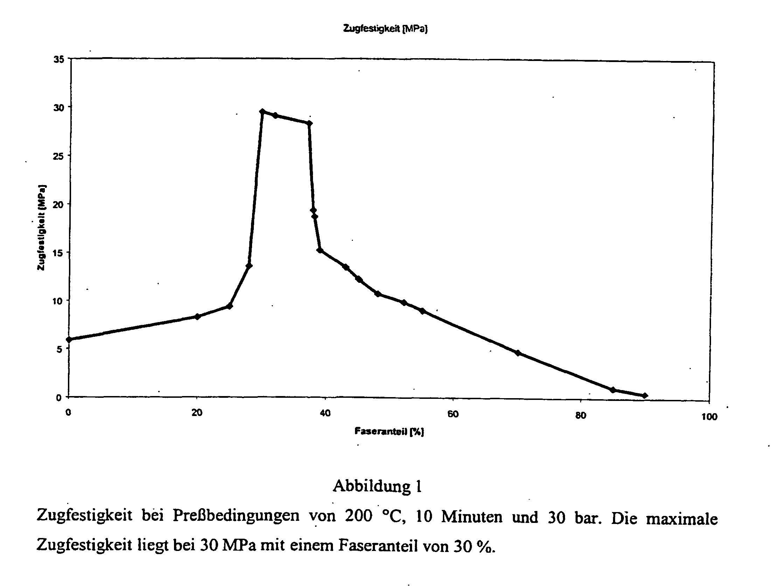

Zur Umsetzung mit den Monomeren a) werden in an sich bekannter Weise Radikalstarter, wie organische Peroxide, z.B. t-Butyl-per-3,5,5-trimethylhexanoat (TBPIN) zugesetzt. Bei erhöhten Temperaturen (> 160 °C) zerfallen diese und setzen damit die eigentliche Polymerisation in Gang. Das vorliegende, erfindungsgemäße Verfahren ist nun dadurch gekennzeichnet, daß zusammen mit den Monomeren bestimmte Mengen an Fasern umgesetzt werden und in der oben beschriebenen Weise einen festen Werkstoff bilden. Dabei macht die vorliegende technische Lehre von dem überraschenden Umstand Gebrauch, daß Werkstoffe mit maximaler Zugfestigkeit nur bei ausgewählten engen Anteilen an Fasermaterial erreicht werden. Im Gegensatz zur naheliegenden Annahme, daß eine erhöhter Faseranteil im Werkstoff auch zu einer verbesserten Zugfestigkeit führt, zeigt sich, daß nur bei Verwendung von 20 bis 45 Gew.-% Fasermaterial - bezogen auf das Matrixmatrial aus den Monomeren a) und Comonomeren b) im vorliegenden Verfahren, Materialien mit erhöhter Zugfestigkeit, das heißt Werte von größer/gleich 20 MPa, möglich sind. Besonders bevorzugt ist es, den Faseranteil im Bereich von 30 bis 40 Gew.-%, bezogen auf die Menge an Komponenten a) und b) zu begrenzen. Die außergewöhnliche Festigkeit gerade des ausgewählten Bereichs an Fasermenge kann durch die nicht-limitierende Abbildung 1 demonstriert werden.

Weiterhin können den Verbundwerkstoffen an sich bekannte weitere Hilfsstoffe zugesetzt werden, hierzu gehören Flammschutzmittel, Farbpigmente, UV-Absorber sowie organische und/oder anorganische Füllstoffe. Als anorganische Füllstoffe eignen sich natürliche und synthetische Kieselsäuren (Aerosiltypen auch hydrophobiert, Amosiltypen, Zeolithe wie Sasil und Flavith D (Geruchsabsorber der Fa. Degussa), silikatische Mikrohohlkugeln (Fillite der Fa. Omya) und natürliche Silikate wie Betonite, Montmorillonite, Talk, Kaolinit und Wollastonit. Geeignete Farbpigmente sind beispielsweise Calciumcarbonat, Calciumsulfat, Bariumsulfat, Titandioxid und Ruß. Verschiedene Rußtypen (Furnaceruße, Gasruße z. B. Printex 60 Fa. Degussa) färben schon in geringen Konzentrationen das Bauteil schwarz ein und schützen es gegen UV-Strahlen. Die Einsatzkonzentration der Hilfsstoffe liegt bei 0,1 bis 5 Gew.-%. Organische Füllstoffe sind beispielsweise Stärke und Stärkederivate, Weizenproteine, Cellulosepulver und Chitin-Chitosanpulver.

Obwohl die vorgenannten Matrizes auch mit synthetischen Fasern wie Glasfasern, Kohlenstoffasern, Metallfasern und dgl. zu Faserverbundwerkstoffen verarbeitet werden können, werden erfindungsgemäß vorzugsweise Naturfasern eingesetzt. Dabei können diese Naturfasern in Form von Kurzfasern, Garnen, Rovings oder vorzugsweise textile Flächengebilde in Form von Vliesen, Nadelvlies, Wirrvliesen, Geweben, Gelegen oder Gewirken auf der Basis von Flachs-, Hanf-, Stroh-, Holzwolle-, Sisal-, Jute-, Kokos-, Ramie-, Bambus-, Bast-, Cellulose-, Baumwoll- oder Wollfasern, Tierhaaren oder Fasern auf Basis von Chitin/Chitosan oder deren Kombination eingesetzt werden.

Ein weiterer Gegenstand der vorliegenden Erfindung betrifft Faserverbundwerkstoffe, enthaltend ein Fasermaterial und ein Matrixmaterial auf Basis eines radikalischen Polymerisats aus a) epoxidierten Fettstoffen, die mit olefinisch ungesättigten Carbonsäuren ringgeöffnet wurden, mit mindestens einem olefinisch ungesättigten Comonomeren b) wobei das Fasermaterial zu 25 bis 45 Gew.-%, bezogen auf das Gewicht des Matrixmaterials enthalten ist. Die Faserverbundwerkstoff weisen vorzugsweise ein eine maximale Zugfestigkeit von 20 bis 35 MPa auf. Die Dichte liegt vorzugsweise im Bereich von 0,1 bis 1,0 g/cm³ und vorzugsweise im Bereich von 0,1 bis 0,8 g/cm³.

Die erfindungsgemäßen Faserverbundwerkstoffe werden nach allen bekannten Herstellungstechnologien zu Formkörpern verarbeitet. Allen diesen bekannten Herstellungstechnologien von Formkörpern ist gemeinsam, daß die Ausgangswerkstoffe Faser und Matrix zu einer Formmasse zusammengeführt werden, welche auf, in oder zwischen festen Formwerkzeugen zu einem Verbund aushärten. Dabei wird der Faser-Ausgangswerkstoff in eine ungehärtete Matrixmasse des Duroplasten eingebracht und durch einen Verdichtungsvorgang völlig mit diesem noch niedrigviskosen duroplastischen Harz benetzt und umhüllt. Die Art des einzubringenden Fasermaterials bestimmt daher maßgeblich das zu verwendende Herstellungsverfahren.

Ein weiterer Gegenstand der vorliegenden Erfindung ist die Verwendung der erfindungsgemäßen Verbundwerkstoffe zur Herstellung von Bauteilen für den Fahrzeugbau, d. h. den Automobilbau, Schienenfahrzeugbau, Flugzeugbau, die Herstellung von Karosserieteilen sowie Inneneinrichtungen. Fernerhin können die erfindungsgemäßen Verbundwerkstoffe in der Bauindustrie für Dämmstoffe, Sandwichelemente und dergleichen, im Fensterbau zum Bau von Fensterrahmen, Türrahmen und Türen verwendet werden, in der Möbelindustrie zur Herstellung von Platten, Möbelteilen und Möbeln, in der Elektro-/Energieindustrie zur Herstellung von Computern, Haushaltsgeräten, Gehäusen, Flügeln von Gebläsen oder Windenergieanlagen. Im Bereich der Freizeitgestaltung und im Sport können aus den erfindungsgemäßen Verbundwerkstoffen Sportgeräte, Boote, Segelflugzeuge und Spielwaren hergestellt werden, im Maschinenbau können sie zur Herstellung von Zahnrädern oder Getriebeteilen eingesetzt werden, in der Abfallwirtschaft zur Herstellung von Abfallbehältern. Im Anlagenbau können aus den erfindungsgemäßen Verbundwerkstoffen Behälter, Pumpen, Rohrelemente hergestellt werden, in der Verpackungsindustrie lassen sich die erfindungsgemäßen Werkstoffe zur Herstellung von Flaschen, Hohlkörpern, Formteilen und technischen Verpackungen verwenden. Schließlich lassen sich die erfindungsgemäßen Verbundwerkstoffe in der Landwirtschaft zur Herstellung von Behältern, Futtermittelsilos, Pflanzentöpfen und in der Sicherheitstechnik zur Herstellung von Schutzhelmen einsetzen.

### Beispiele

### Herstellung von Ringöffnungsprodukt auf Basis von epoxidiertem Sojaöl

10 kg Sojaölepoxid (Epoxidgehalt 6,6 Gew.-%) wurden bei 120 °C gerührt und gleichmäßig 5,9 kg Acrylsäure und 637 g p-Benzochinon zugeführt. Der Ansatz wurde insgesamt sechs Stunden gerührt, dann auf 90 °C abgekühlt. Das so gewonnene Sojaölepoxyacrylat lag als goldgelbes, viskoses Öl vor.

### Herstellung eines Prepregs aus erfindungsgemäßem Faserverbundwerkstoff:

305 g Sojaölepoxacrylat wurden mit 12,2 g Acrylsäure (4 Gew.-%) und 6,1 g TBPIN-Peroxid (2 Gew.-%) sowie unterschiedlichen Mengen eines Flachsfaserwirrvlieses gemischt und auf einer Platte von 20 cm Länge, 10 cm Breite und 3 mm Randhöhe verteilt. Diese härtete im Umluftofen bei 200 °C und einem Preßdruck von 30 bar sowie eine Preßzeit von 10 Minuten aus.

Der Faseranteil wurde von 0 bis 90 Gew.-% variiert. In Abbildung 1 ist die Zugfestigkeit der Proben gegen den Faseranteil aufgetragen. Man erkennt, daß überraschenderweise bei einem Faseranteil von 25 bis 45 Gew.-% ein Maximum der Zugfestigkeit auftritt.

Analog der obigen Vorschrift wurde ein weiteres Prepreg hergestellt. Der Faseranteil lag bei 34 Gew.-%. Es wurden eine Mischung aus Acrylsäure/Methacrylsäure (jeweils 2 Gew.-%) eingesetzt. Die Zugfestigkeit lag bei 30 MPa.

Ein weiterer Ansatz betraf eine Matrix aus Sojaölepoxid mit jeweils 2 Gew.-% Acryl- und methacrylsäure. Der Faseranteil lag bei 34 Gew.-%. Der Preßdruck betrug 30 bar, die Preßzeit 1 Minute und die Temperatur lag bei 153 °C. Die Zugfestigkeit wurde mit 22 MPa gemessen.

## Patentansprüche

1. Verfahren zur Herstellung von Faserverbundwerkstoffen auf der Basis von Naturfasern und einem Matrixmaterial, wobei das Matrixmaterial durch radikalische Polymerisation aus den Monomeren a) und mindestens einem Comonomeren b) hergestellt wird und die Monomeren a) ausgewählt sind aus der Gruppe der Ringöffnungsprodukte von epoxidierten Fettstoffen mit olefinisch ungesättigten Carbonsäuren und die Comonomeren b) ausgewählt sind aus der Gruppe der olefinisch ungesättigte Carbonsäuren, **dadurch gekennzeichnet, daß** die Polymerisationsreaktion in Gegenwart von 25 bis 45 Gew.-% des Fasermaterials, bezogen auf das Gewicht des Matrixmaterials bei Temperaturen von 100 bis 200 °C sowie erhöhtem Druck von 20 bis 200 bar durchgeführt wird.

2. Verfahren nach Anspruch 1, **dadurch gekennzeichnet, dass** die Polymerisationsreaktion bei erhöhtem Druck von 20 bis 60 bar stattfindet.

3. Verfahren nach den Ansprüchen 1 oder 2, **dadurch gekennzeichnet, dass** die Polymerisationsreaktion bei Temperaturen von 130 bis 200 °C und vorzugsweise 150 bis 180°C stattfindet.

4. Verfahren nach den Ansprüchen 1 bis 3, **dadurch gekennzeichnet, dass** die Polymerisationsreaktion in Gegenwart von 25 bis 40, vorzugsweise 30 bis 40 Gew.-% Fasermaterial stattfindet.

5. Verfahren nach den Ansprüchen 1 bis 4, **dadurch gekennzeichnet, dass** die Monomeren a) hergestellt werden durch Ringöffnung epoxidierten Fettstoffen mit olefinisch ungesättigten Carbonsäuren, die aus der Gruppe Acrylsäure, Methacrylsäure, Crotonsäure, Itakonsäure, Maleinsäure, Fumarsäure oder deren Mischungen ausgewählt sind.

6. Verfahren nach den Ansprüchen 1 bis 5, **dadurch gekennzeichnet, daß** die Comonomeren b) ausgewählt sind aus der Gruppe Acrylsäure, Methacrylsäure, Alkylacrylsäure oder deren Mischungen.

7. Verfahren nach den Ansprüchen 1 bis 6, **dadurch gekennzeichnet, dass** die Comonomere b) in Mengen von 1 bis 10 Gew.-% , vorzugsweise 2 bis 6 Gew.-% und insbesondere 2 bis 4 Gew.-%, bezogen auf Monomer a) eingesetzt werden.

8. Verfahren nach Anspruch 1 bis 7, **dadurch gekennzeichnet, dass** neben den Comonomeren b) noch weitere Verbindungen eingesetzt werden, die aus der Gruppe der ungesättigten Carbonsäuren gemäß Anspruch 6, deren Ester von C₁- bis C₃₀-Alkoholen, vorzugsweise von C₁₀- bis C₂₂-Alkoholen sowie Allylestern, oder Vinylestern wie Vinylacetat, Vinylproprionat oder Vinylversatat, Vinyllaurat oder Styrol, Divinylbenzol oder deren Mischungen ausgewählt werden.

9. Verfahren nach den Ansprüchen 1 bis 8, **dadurch gekennzeichnet, dass** die epoxidierten Fettstoffe ausgewählt sind aus epoxidierten Triglyceriden nativen Ursprungs, vorzugsweise aus epoxidiertem Kokos-, Hanf-, Lein-, Palm-, Palmkern-, Raps-, Ricinus-, Sonnenblumen-, Sojaöl oder deren Mischungen

10. Verfahren nach den Ansprüchen 1 bis 9, **dadurch gekennzeichnet, daß** als Naturfasern, Kurzfasern, textile Flächengebilde in Form von Vliesen, Nadelvlies, Wirrvliesen, Geweben oder Gewirken auf der Basis von Flachs-, Hanf-, Stroh-, Holzwolle-, Sisal-, Jute-, Kokos-, Ramie-, Bambus-, Bast-, Cellulose-, Baumwoll- oder Wollfasern, Tierhaaren oder Fasern auf Basis von Chitin/Chitosan oder deren Kombination verwendet werden.

## Claims

1. A process for the production of fibre composites based on natural fibres and a matrix material, the matrix material being produced by radical polymerization from the monomers a) and at least one comonomer b) and the monomers a) being selected from the group of ring opening products of epoxidized fatty compounds with olefinically unsaturated carboxylic acids and the comonomers b) being selected from the group of olefinically unsaturated carboxylic acids, **characterized in that** the polymerization reaction is carried out in the presence of 25 to 45% by weight of the fibres, based on the weight of the matrix material, at temperatures of 100 to 200°C and under elevated pressures of 20 to 200 bar.

2. A process as claimed in claim 1, **characterized in that** the polymerization reaction is carried out under an elevated pressure of 20 to 60 bar.

3. A process as claimed in claim 1 or 2, **characterized in that** the polymerization reaction is carried out at temperatures of 130 to 200°C and preferably at temperatures of 150 to 180°C.

4. A process as claimed in claims 1 to 3, **characterized in that** the polymerization reaction is carried out in the presence of 25 to 40% by weight and preferably 30 to 40% by weight of fibres.

5. A process as claimed in claims 1 to 4, **characterized in that** the monomers a) are produced by ring opening of epoxidized fatty compounds with olefinically unsaturated carboxylic acids from the group consisting of acrylic acid, methacrylic acid, crotonic acid, itaconic acid, maleic acid, fumaric acid or mixtures thereof.

6. A process as claimed in claims 1 to 5, **characterized in that** the comonomers b) are selected from the group consisting of acrylic acid, methacrylic acid, alkyl acrylic acid or mixtures thereof.

7. A process as claimed in claims 1 to 6, **characterized in that** the comonomers b) are used in quantities of 1 to10% by weight, preferably 2 to 6% by weight and more particularly 2 to 4% by weight, based on monomer a).

8. A process as claimed in claims 1 to 7, **characterized in that** other compounds selected from the group consisting of the unsaturated carboxylic acids according to claim 6, esters thereof with C₁₋₃₀ alcohols, preferably C₁₀₋₂₂ alcohols, and allyl esters or vinyl esters, such as vinyl acetate, vinyl propionate or vinyl versatate, vinyl laurate or styrene, divinyl benzene or mixtures thereof are used in addition to the comonomers b).

9. A process as claimed in claims 1 to 8, **characterized in that** the epoxidized fatty compounds are selected from epoxidized triglycerides of native origin, preferably from epoxidized coconut oil, hemp oil, flax oil, palm oil, palm kernel oil, rapeseed oil, castor oil, sunflower oil, soybean oil or mixtures thereof.

10. A process as claimed in claims 1 to 9, **characterized in that** the natural fibres are selected from short fibres, sheet-form textiles in the form of nonwovens, needle-punched nonwovens, random laid nonwovens, woven fabrics or knitted fabrics based on flax, hemp, straw, wood wool, sisal, jute, coconut, ramie, bamboo, bast, cellulose, cotton or wool fibres, animal hair or fibres based on chitin/chitosan and combinations thereof.

## Revendications

1. Procédé d'obtention de matériaux composites renfermant des fibres à base de fibres naturelles et d'un matériau de matrice, selon lequel le matériau de matrice est obtenu par polymérisation radicalaire à partir de monomères a) et d'au moins un comonomère b), les monomères a) étant choisis dans le groupe des produits d'ouverture de cycle de corps gras époxydés avec des acides carboxyliques à insaturation oléfinique, et les comonomères b) étant choisis dans le groupe des acides carboxyliques à insaturation oléfinique,
**caractérisé en ce que**
la réaction de polymérisation est mise en oeuvre en présence de 25 à 45 % en poids du matériau fibreux par rapport au poids du matériau de matrice, à des températures de 100 à 200°C et à une pression élevée de 20 à 200 bars.

2. Procédé selon la revendication 1,
**caractérisé en ce que**
la réaction de polymérisation est mise en oeuvre à une pression de 20 à 60 bars.

3. Procédé selon les revendications 1 ou 2,
**caractérisé en ce que**
la réaction de polymérisation est mise en oeuvre à des températures de 130 à 200°C et de préférence de 150 à 180°C.

4. Procédé selon les revendications 1 à 3,
**caractérisé en ce que**
la réaction de polymérisation est mise en oeuvre en présence de 25 à 40, de préférence de 30 à 40 % en poids de matériau fibreux.

5. Procédé selon les revendications 1 à 4,
**caractérisé en ce que**
les monomères a) sont obtenus par ouverture de cycle de corps gras époxydés avec des acides carboxyliques à insaturation oléfinique, qui sont choisis dans le groupe de l'acide acrylique, de l'acide méthacrylique, de l'acide crotonique, de l'acide itaconique, de l'acide maléique, de l'acide fumarique ou de leurs mélanges.

6. Procédé selon les revendications 1 à 5,
**caractérisé en ce que**
les comonomères b) sont choisis dans le groupe de l'acide acrylique, de l'acide méthacrylique, des acides alkylacryliques ou de leurs mélanges.

7. Procédé selon les revendications 1 à 6,
**caractérisé en ce que**
les comonomères b) sont utilisés en quantités de 1 à 10 % en poids, de préférence de 2 à 6 % en poids, et en particulier de 2 à 4 % en poids, par rapport au monomère a).

8. Procédé selon les revendications 1 à 7,
**caractérisé en ce qu'**
outre les comonomères b), on met en oeuvre d'autres composés choisis dans le groupe des acides carboxyliques insaturés selon la revendication 6, de leurs esters d'alcools en C₁ à C₃₀, de préférence d'alcools en C₁₀ à C₂₂ ainsi que des esters allyliques, ou vinyliques comme l'acétate de vinyle, le propionate de vinyle ou le versatate de vinyle, du laurate de vinyle ou du styrène, du divinylbenzène ou de leurs mélanges.

9. Procédé selon les revendications 1 à 8,
**caractérisé en ce que**
les corps gras époxydés sont choisis parmi les triglycérides époxydés d'origine native, de préférence les huiles époxydées de coprah, de chanvre, de lin, de palme, de palmiste, de colza, de ricin, de tournesol et de soja, ou leurs mélanges.

10. Procédé selon les revendications 1 à 9,
**caractérisé en ce que**
comme fibres naturelles on utilise des fibres courtes, des articles en nappe textiles sous forme de voiles, de voiles aiguilletés, de voiles enchevêtrés, de tissus ou de tissus maillés à base de fibres de lin, de chanvre, de paille, de laine de bois, de sisal, de jute, de coco, de ramie, de bambou, de liber, de cellulose, de coton ou de laine, de poils d'animaux ou de fibres à base de chitine/chitosane ou de leurs combinaisons.
